# EUROPÄISCHE PATENTANMELDUNG

(11) **EP 1 679 253 A2**
(43) Veröffentlichungstag der Anmeldung: **12.07.2006**
(21) Anmeldenummer: 05112543.3
(22) Anmeldetag: 21.12.2005
(51) Int. Cl.: B62K 21/26

(54) **Seitengriffelement für Fahrradgriffe**

(30) Priorität: 07.01.2005 DE 202005000113 U
(71) Anmelder: RTI Sports Vertrieb von Sportartikeln GmbH, 56220 Urmitz (DE)
(72) Erfinder: Ejvinsson, Peter, 114 25, Stockholm (SE)
(74) Vertreter: von Kirschbaum, Alexander

(57) **Zusammenfassung**

Ein Seitengriffelernent für Fahrradgriffe weist einen Griffteil (18) auf. Mit dem Griffteil (18) ist ein Befestigungselement (16) zum Befestigen an einem Lenker verbunden. Das Befestigungselement (16) weist eine Befestigungsöffnung (20) auf. Die Befestigungsöffnung (20) ist mit einem Verschlusselement (32) verschlossen. Erfindungsgemäß ist eine Außenfläche des Verschlusselementes (32) derart ausgebildet, dass die Außenfläche mit einer angrenzenden Oberfläche (42) des Griffteifs (18) und/ oder des Befestigungselements (16) eine gemeinsame Fläche bildet.

## Beschreibung

Die Erfindung betrifft ein Seitengriffelelement für Fahrradgriffe, insbesondere für Mountainbike- und/ oder Trekkingbike-Fahrradgriffe.

Insbesondere bei Fahrradgriffen für Mountainbikes und/ oder Trekkingräder ist es bekannt, an dem Fahrradgriff oder am Lenkerende ein Seitengriffelement vorzusehen. Das Seitengriffelement weist ein Griffteil auf, das im Wesentlichen senkrecht zum Lenker und üblicherweise in Fahrtrichtung verläuft. Das Seitengriffelement dient dazu, dass durch das Vorsehen eines weiteren Griffelementes die Stellung der Hand gewechselt werden kann. Hierzu kann das Seitengriffelement von außen gegriffen werden. Das Griffteil des Seitengriffelements ist mit einem Befestigungselement verbunden und insbesondere einstückig ausgebildet. Mit Hilfe des Befestigungselements, welches eine Befestigungsöffnung aufweist, ist eine Befestigung des Seitengriffelementes an einem Lenker möglich. Hierzu ist die Befestigungsöffnung vorzugsweise derart ausgebildet, dass sie den Lenker zumindest teilweise umgibt. Insbesondere ist die Befestigungsöffnung kreisförmig und umgibt den Lenker somit vollständig. Mit Hilfe eines Klemmelementes, das beispielsweise eine Schraube aufweist, kann der Querschnitt der Befestigungsöffnung verringert und somit ein klemmendes Befestigen des Befestigungselementes an dem Lenker erfolgen. Ferner weist das Seitengriffelement zum Verschließen des Lenkerendes bzw. zum Verschließen der Befestigungsöffnung ein üblicherweise in das Lenkerende eingeschlagenes bzw. eingedrücktes Verschlusselement auf.

Aufgabe der Erfindung ist es, ein Seitengriffelement mit einem Verschlusselement zu schaffen, wobei die Funktionalität des Verschlusselementes verbessert ist.

Die Lösung der Aufgabe erfolgt erfindungsgemäß durch die Merkmale des Anspruchs 1.

Das Verschlusselement zum Verschließen der Befestigungsöffnung ist erfindungsgemäß derart ausgestaltet, dass eine Außenfläche des Verschlusselementes eine gemeinsame Fläche mit einer angrenzenden Oberfläche des Griffteils und/ oder des Befestigungselements bildet. Das Verschlusselement ist in seiner Form somit derart ausgebildet, dass sich die Außenfläche in die durch das GrifFteil und/ oder das Befestigungselement gebildete Oberfläche einfügt. Dies hat den Vorteil, dass in diesem Bereich keine Kanten oder Vorsprünge entstehen, die beim seitlichen Greifen des Seitengriffelementes unangenehm sind und zu Druckstellen führen können.

Vorzugsweise ist die Außenfläche des Verbindungselementes gekrümmt. Hierbei ist die Krümmung vorzugsweise derart ausgebildet, dass die Formgebung der angrenzenden Oberfläche fortgeführt ist. Hierdurch ist insbesondere auch das Design des Seitengriffelementes verbessert.

Bei einer besonders bevorzugten Ausführungsform des Seitengriffelementes wird das Verschlusselement durch das Befestigungselement gehalten. Das Befestigungselement, das vorzugsweise ein Klemmelement zum klemmenden Befestigen an einem Lenker aufweist, hält das Verschlusselement vorzugsweise ebenfalls durch eine klemmende Befestigung. Hierzu weist das Verschlusselement im Bereich des Klemmelementes eine der Befestigungsöffnung entsprechende Außenkontur auf. Insbesondere ist die Außenkontur in diesem Bereich teilkreisförmig. Zusätzlich kann das Verschlusselement und das Befestigungselement eine Verdrehsicherung aufweisen, um die Lage des Verschlusselements eindeutig zu definieren. Dies ist insbesondere bei Verschlusselementen mit einer kreisrunden oder symmetrischen Außenkontur vorteilhaft. Als Verdrehsicherung kann das Verschlusselement oder das Befestigungselement einen Ansatz aufweisen, der in einen entsprechenden Schlitz oder eine Ausnehmung an dem jeweils anderen Element eingreift.

Bei einer besonders bevorzugten Weiterbildung der Erfindung weist das Griffteil zusätzlich ein Einsatzelement auf. Hierdurch ist es möglich, ein Einsatzelement aus anderem, beispielsweise weichem Material vorzusehen, so dass die ergonomischen Eigenschaften des Seitengriffelementes verbessert sind. Ferner kann das Seitengriffelement hierdurch leichter ausgestaltet werden, da das Seitengriffelement stabil ausgebildet sein muss und daher üblicherweise aus Metal hergestellt ist. Durch das Vorsehen eines derartigen Einsatzelementes kann in dem Griffteil eine entsprechende Öffnung, vorzugsweise eine Durchgangsöffnung, vorgesehen sein, in die das aus einem leichteren Material hergestellte Einsatzelement eingesetzt ist.

Vorzugsweise ist das Einsatzelement mit dem Verschlusselement verbunden, insbesondere einstückig ausgebildet. Hierdurch ist es möglich, dass das Einsatzelement zusammen mit dem Verschlusselement mittels dem Befestigungselement bzw. dem Klemmelement gehalten wird. Ein gesondertes Befestigen oder Halten des Einsatzelementes ist sodann nicht erforderlich. Ggf. weist das Einsatzelement einen Ansatz auf, der in montiertem Zustand einen am Griffteil vorgesehenen Vorsprung hintergreift, um die Lage des Einsatzelementes zu fixieren.

Um die Lage des Verschlusselementes zu definieren und ein Verkippen zu vermeiden, weist das Verschlusselement vorzugsweise einen insbesondere stiftförmigen Führungsansatz auf, der in das Lenkerende eingesteckt wird. Der Führungsansatz ist an seiner Außenseite vorzugsweise mit Lamellen versehen. Hierdurch ist es möglich, unterschiedliche Innendurchmesser der Lenkerenden auszugleichen. Vorzugsweise sind mehrere, insbesondere ringförmige Lamellen an der Außenseite des Führungsansatzes vorgesehen.

Nachfolgend wird die Erfindung an Hand bevorzugter Ausführungsformen unter Bezugnahme auf die anliegenden Zeichnungen näher erläutert.

### Es zeigen:

- Fig. 1: eine schematische Draufsicht eines Fahrradgriffs mit Seitengriffelement,
- Fig. 2: eine schematische Seitenansicht des mit dem Fahrradgriff verbundenen Seitengriffelementes,
- Fig. 3: eine schematische perspektivische Seitenansicht des mit dem Fahrradgriff verbundenen Seitengriffelementes ohne Verschlusselement,
- Fig. 4: eine schematische Seitenansicht des Seitengriffelementes ohne Verschlusselement,
- Fig. 5: eine schematische Draufsicht des Seitengriffelementes,
- Fig 6: eine schematische Draufsicht einer ersten Ausführungsform des Verschlusselements,
- Fig. 7: eine schematische perspektivische Ansicht einer weiteren Ausführungsform eines Seitengriffelementes,
- Fig. 8: eine schematische Draufsicht eines mit einem Einsatzelement verbundenen Verschlusselementes und
- Fig. 9: eine schematische Draufsicht auf das in Fig. 8 dargestellte Verschlusselement.

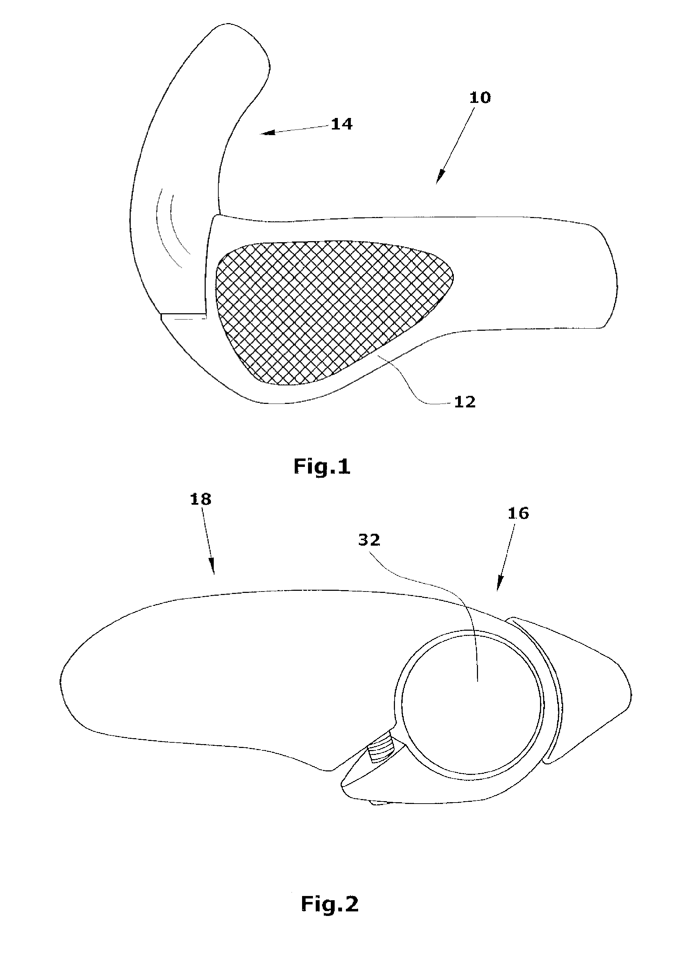

Ein Fahrradgriff-Seitengriffelement, wie in den Fig. 1 - 3 dargestellt, ist beispielsweise in PCT/EP2004/009258 beschrieben. Der dargestellt Fahrradgriff 10 weist einen Ansatz 12 zur Auflage des Handtellers auf. Die Befestigung des Fahrradgriffs 10 erfolgt mittels des Seitengriffelementes 14. Hierzu weist das Seitengriffelement 14 ein Befestigungselement 16 auf, wobei im dargestellten Ausführungsbeispiel das Befestigungselement 16 und das sich hieran anschließende Griffteil 18 einstückig ausgebildet sind, so dass das Befestigungselement 16 ein Teil des Griffteils 18 bildet. Das Befestigungselement 16 weist eine im dargestellten Ausführungsbeispiel kreisringförmige Befestigungsöffnung 20 auf. In die Befestigungsöffnung 20 ist ein rohrförmiges geschlitztes Innenelement 22 des Griffs 10 angeordnet. Das rohrförmige Innenelement 22 wird auf das nicht dargestellte Lenkerende aufgesteckt. Die Verbindung des rohrförmigen Innenelementes 22 mit dem Lenkerende erfolgt durch eine Klemmung, indem der Innendurchmesser des rohrförmigen Innenelementes 22 verringert wird. Dies ist auf Grund des Schlitzes 24, der in Längsrichtung des Innenelements 22 verläuft, möglich. Das Verringern des Querschnitts des Innenelementes 22 erfolgt mit Hilfe des Klemmelementes 26. Das Klemmelement 26 weist einen in dem Befestigungselement vorgesehenen Schlitz 28 und eine Schraube 30 auf. Die Schraube 30 greift in ein in dem Befestigungselement vorgesehenes Gewinde ein. Durch Anziehen der Schraube 30 wird die Breite des Schlitzes 28 und hierdurch der Innenquerschnitt der Befestigungsöffnung 20 verringert. Dies führt wiederum zur Verringerung der Breite des Schlitzes 24 und zu einer entsprechenden klemmenden Befestigung des zylindrischen Innenelementes 22 an dem Lenkerende.

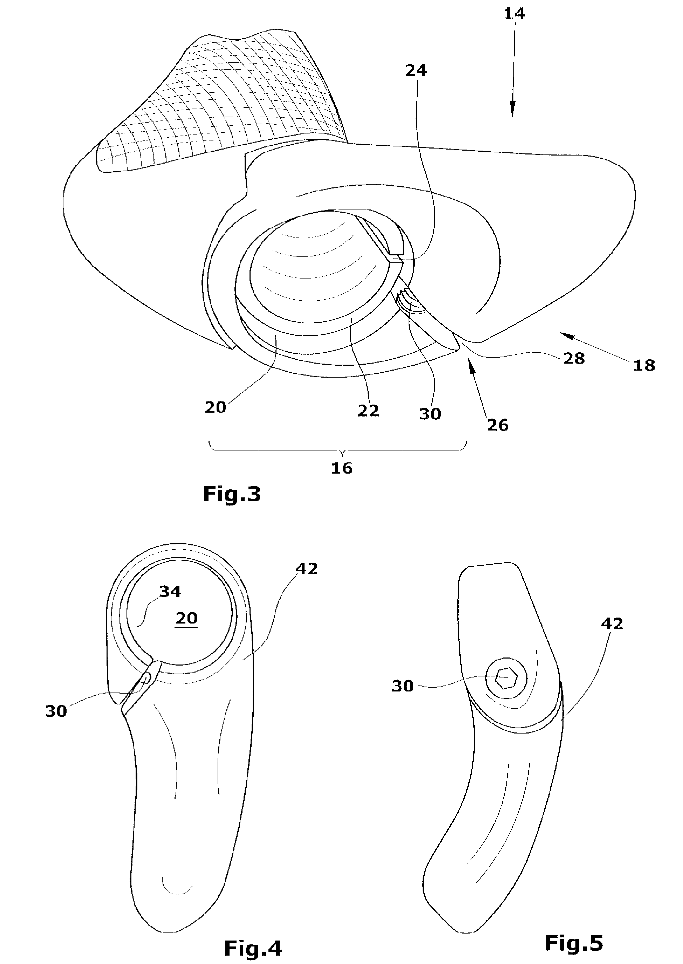

Die Befestigungsöffnung 20 ist erfindungsgemäß durch ein Verschlusselement 32 (Fig. 2) verschlossen. Zur Aufnahme des Verschlusselementes 32 in der Befestigungsöffnung 20 weist diese einen ringförmigen Absatz 34 (Fig. 4) auf.

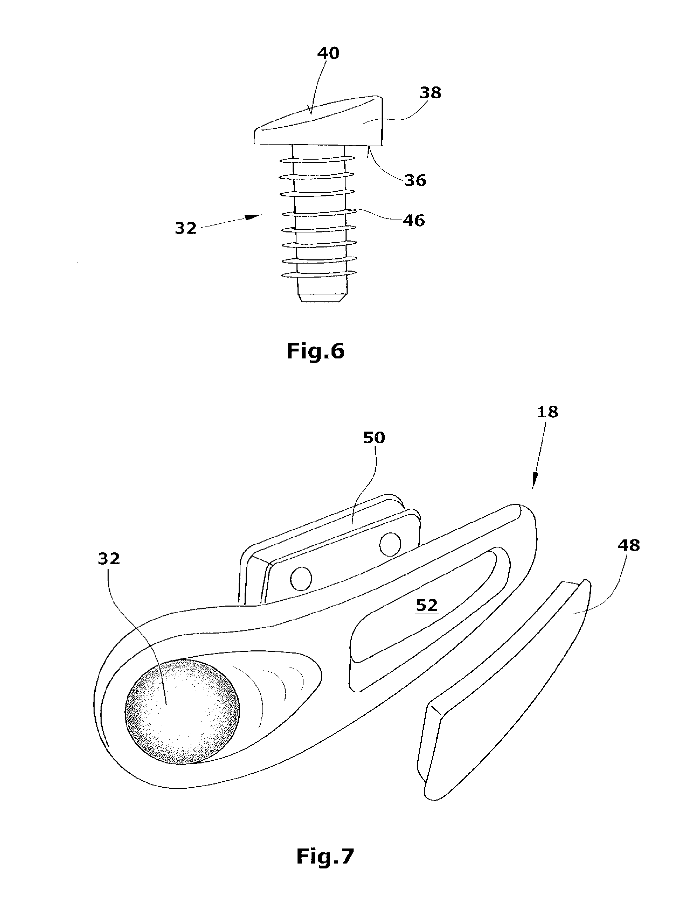

Das Verschlusselement wird in die Befestigungsöffnung 20 eingesetzt, bis eine Unterseite 36 (Fig. 6) eines Kopfs 38 des Verschlusselementes 32 an dem Absatz 34 aufliegt. Anschließend erfolgt ein Anziehen der Schraube 30, wodurch zusätzlich zu dem klemmenden Befestigen des Innenelementes 22 auch der Kopf 38 klemmend in der Befestigungsöffnung gehalten wird.

Eine Außenfläche 40 des Kopfs 38 des Verschlusselementes 32 ist derart ausgebildet, dass das Verschlusselement 32 bzw. die Außenfläche 40 des Verschlusselementes 32 eine gemeinsame Fläche mit einer angrenzenden Oberfläche 42 bildet. Bei der angrenzenden Oberfläche 42 handelt es sich im dargestellten Ausführungsbeispiel teilweise um eine Oberfläche des Befestigungselementes 16 und teilweise um die Oberfläche im Übergangsbereich zwischen dem Befestigungselement 16 und dem Griffteil 18.

Die Außenfläche 40 ist vorzugsweise gekrümmt ausgebildet und führt die Formgebung der angrenzenden Oberfläche 42 weiter.

Vorzugsweise ist der Kopf 38 des Verschlusselementes 32 mit einem stiftförmigen Führungsansatz 44 verbunden. Der stiftförmige Führungsansatz 44 dient dazu, ein Verkippen des Verschlasselementes 32 zu vermeiden. Hierzu wird der Führungsansatz 44 in die Öffnung des Lenkerendes eingeführt. Um den Führungsansatz 44 in unterschiedliche Öffnungsinnendurchmesser führen zu können, weist der Führungsansatz 44 an seiner Außenseite vorzugsweise mehrere Lamellen auf. Die Lamellen 46 sind kreisringförmig ausgebildet und stellen sicher, dass der Führungsansatz 44 an der Innenseite der Lenkeröffnung anliegt.

Bei einer weiteren bevorzugten Ausführungsform der Erfindung weist das Seitengriffelement neben dem erfindungsgemäß ausgestalteten Verschlusselement 32 ein Einsatzelement 48, 50 (Fig. 7) auf. Das im dargestellten Ausführungsbeispiel zweiteilige Einsatzelement 48, 50 wird in eine im Griffteil 18 vorgesehene Durchgangsöffnung 52 eingesetzt. Hierbei ist das Einsatzelement 48, 50 vorzugsweise aus einem weichen Material, um die Eigenschaften des Seitengriffelementes zu verbessern. Insbesondere kann die Oberfläche des Einsatzelementes 48, 50 aufgerauht oder aus einem rutschfesten Material bestehen, um ein sicheres Greifen des Seitengriffelementes zu gewährleisten. In dem in Fig. 7 dargestellten Ausführungsbeispiel erfolgt die Befestigung der beiden Teile des Einsatzelements 48, 50 indem diese beispielsweise durch Kleben miteinander verbunden werden. Auch kann eine Rastverbindung zwischen den beiden Teilen vorgesehen sein.

Das Vorsehen eines Einsatzelementes stellt eine gegenüber dem Vorsehen des erfindungsgemäßen Verschlusselementes selbstständige Erfindung dar.

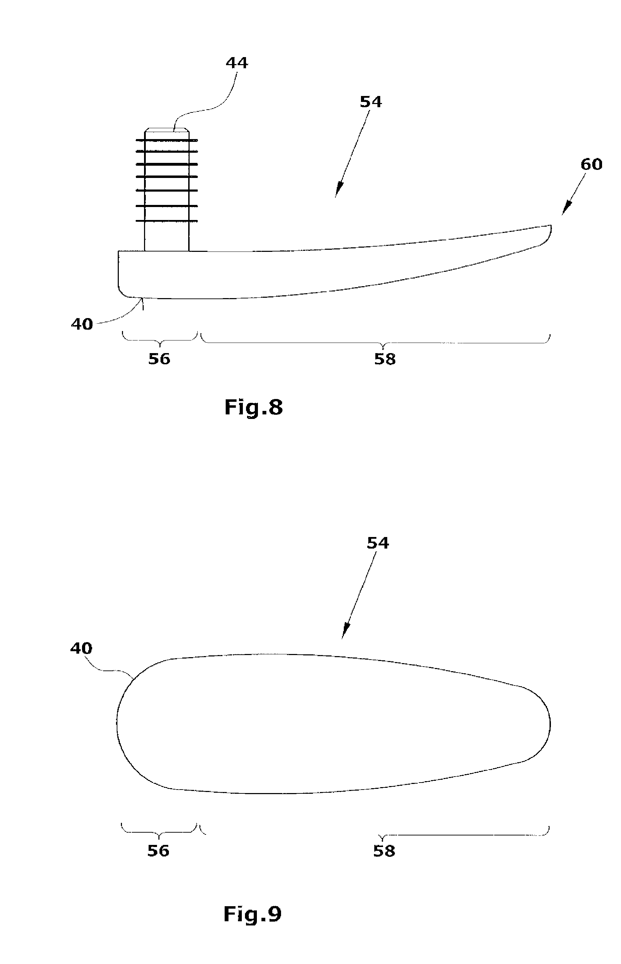

Bei einer bevorzugten Weiterbildung der Erfindung sind die beiden vorstehend beschriebenen Ausführungsformen (Fig. 1 - 6 und Fig. 7) miteinander kombiniert. Dementsprechend ist das Verschlusselement 32 mit dem Einsatzelement 48, 50 zu einem Einsatz-Verschlusselement 54 (Fig. 8, 9) verbunden. Das Einsatz-Verschlusselement 54 weist im dargestellten Ausführungsbeispiel somit einen Bereich 56 auf, der das Verschlusselement bildet und einen Bereich 58, der das Einsatzelement bildet. Das Einsatz-Verschlusselement 54 ist einstückig ausgebildet. Vorzugsweise ist im Bereich 56 ein Führungsansatz 44, wie an Hand von Fig. 6 beschrieben, vorgesehen. Die Befestigung des Einsatz-Verschlusselementes 54 erfolgt durch ein klemmendes Halten in der Befestigungsöffnung 20, wie an Hand der ersten Ausführungsform (Fig. 1 - 6) beschrieben.

Um sicherzustellen, dass der das Einsatzelement bildende Bereich 58 in einer entsprechenden Öffnung, insbesondere eine Durchgangsöffnung, des Griffteils auch bei starker Beanspruchung verbleibt und nicht aus dieser herausgedrückt wird, kann an einem Ende 60 (Fig. 8) des Einsatz-Verschlusselementes 54 ein Ansatz vorgesehen sein, der einen in dem entsprechenden Bereich des Griffteils vorgesehenen Vorsprung hintergreift.

## Patentansprüche

1. Seitengriffelement für Fahrradgriffe, mit
einem Griffteil (18),
einem mit dem Griffteil (18) verbundenen Befestigungselement (16) mit einer Befestigungsöffnung (20) zum Befestigen an einem Lenker und
einem die Befestigungsöffnung (20) verschließenden Verschlusselement (32, 54),
**dadurch gekennzeichnet, dass**
eine Außenfläche (40) des Verschlusselementes (32, 54) eine gemeinsame Fläche mit einer angrenzenden Oberfläche (42) des Griffteils (18) und/ oder des Befestigungselementes (16) bildet.

2. Seitengriffelement nach Anspruch 1, **dadurch gekennzeichnet, dass** die Außenfläche (40) gekrümmt ist, insbesondere die Formgebung der angrenzenden Oberfläche (42) fortführt.

3. Seitengriffelement nach Anspruch 1 oder 2, **dadurch gekennzeichnet, dass** das Verschlusselement (32, 54) durch das Befestigungselement (16) gehalten ist.

4. Seitengriffelement nach einem der Ansprüche 1 - 3, **dadurch gekennzeichnet, dass** das Befestigungselement (16) ein Klemmelement (26) zum klemmenden Befestigen an einem Lenker aufweist.

5. Seitengriffelement nach einem der Ansprüche 1 - 4, **gekennzeichnet durch** ein im Griffteil (18) angeordnetes Einsatzelement (48, 50; 54).

6. Seitengriffelement nach Anspruch 5, **dadurch gekennzeichnet, dass** das Einsatzelement (54) mit dem Verschlusselement (54) verbunden, insbesondere einstückig ausgebildet ist.

7. Seitengriffelement nach Anspruch 5 oder 6, **dadurch gekennzeichnet, dass** das Griffteil (18) eine durch das Einsatzelement (48, 50) verschlossenen Durchgangsöffnung aufweist.

8. Seitengriffelement nach einem der Ansprüche 1 - 7, **dadurch gekennzeichnet, dass** das Verschlusselement (32, 54) einen insbesondere stiftförmigen in den Lenker weisenden Führungsansatz aufweist.

9. Seitengriffelement nach Anspruch 8, **dadurch gekennzeichnet, dass** der Führungsansatz (44) zum Ausgleich von Durchmesserunterschieden an der Außenseite Lamellen (46) aufweist.
